# EUROPEAN PATENT SPECIFICATION

(11) **EP 4 133 943 B1**
(45) Date of publication and mention of the grant of the patent: **29.04.2026**
(21) Application number: 20963305.6
(22) Date of filing: 23.12.2020
(51) Int. Cl.: A23B 7/00, A23L 5/30, A23B 7/015

(54) **METHOD FOR IMPROVING NUTRIENTS IN FOOD INGREDIENT, AND CONTROL APPARATUS, STORAGE CABINET AND ELECTRONIC DEVICE**
VERFAHREN ZUR VERBESSERUNG VON NÄHRSTOFFEN IN EINEM LEBENSMITTELBESTANDTEIL SOWIE STEUERUNGSVORRICHTUNG, AUFBEWAHRUNGSSCHRANK UND ELEKTRONISCHE VORRICHTUNG
PROCÉDÉ POUR L'AMÉLIORATION DE NUTRIMENTS DANS UN INGRÉDIENT ALIMENTAIRE ET APPAREIL DE COMMANDE, ARMOIRE DE STOCKAGE ET DISPOSITIF ÉLECTRONIQUE

(30) Priority: 30.11.2020 CN 202011382358
(43) Date of publication of application: 15.02.2023
(73) Proprietor: Hefei Midea Refrigerator Co., Ltd., Hefei, Anhui 230601 (CN); Hefei Hualing Co., Ltd., Hefei, Anhui 230601 (CN); Midea Group Co., Ltd., Foshan, Guangdong 528311 (CN)
(72) Inventor: YE, Ruisen, Hefei, Anhui 230601 (CN); WANG, Zhe, Hefei, Anhui 230601 (CN); WU, Zhigang, Hefei, Anhui 230601 (CN)
(74) Representative: Whitlock, Holly Elizabeth Ann
(86) International application number: PCT/CN2020/138639
(87) International publication number: WO 2022/110417

(56) References cited:
- CN-A- 106 705 566
- CN-A- 109 084 524
- CN-A- 111 750 605
- CN-A- 111 802 563
- US-A1- 2015 223 402
- US-A1- 2017 135 359
- US-A1- 2018 310 578

## Description

### TECHNICAL FIELD

The present application relates to the field of food preservation, and in particular, to a method and a controlling device for improving nutrients in food ingredients and a storage cabinet.

### BACKGROUND

With the improvement of living standards, users have higher and higher requirements for the quality of fruits and vegetables. Although a refrigerator in the related art can prolong the edible period of fruits and vegetables, the fruits and vegetables will constantly consume their own nutrients to maintain a certain degree of catabolism and oxidation during the refrigeration process in the refrigerator, which will result in poor quality of fruits and vegetables eaten by users.

US20180310578A1 relates to a method of post-harvest light treatment for increasing the ascorbic acid content of a piece of fruit. The method comprises: providing a harvested unripe piece of fruit; and irradiating at least part of the piece of fruit with radiation with a predetermined minimum radiation intensity and during a predetermined continuous radiation period.

CN106705566A relates to a method for controlling fresh-keeping of refrigeration and freezing equipment, the method comprising: detecting the humidity in the fresh-keeping space using a humidity sensor disposed in the fresh-keeping space; determining the type of food placed in the fresh-keeping space based on the humidity; determining corresponding fresh-keeping operating conditions based on the type of food, the fresh-keeping operating conditions including at least a storage temperature range and an oxygen concentration range corresponding to the type of food; and controlling the operation of the refrigeration system and the gas conditioning system so that the temperature of the fresh-keeping space is maintained within the storage temperature range and the oxygen concentration of the fresh-keeping space is maintained within the oxygen concentration range.

### SUMMARY

Examples of the present application are intended to solve at least one of the problems existing in the prior art or related art.

The invention is set out in the appended set of claims. One of the objectives of the examples of the present application is to provide a method for improving nutrients in a food ingredient, to increase the content of nutrients in fruits and vegetables.

The method for improving nutrients in a food ingredient in the example of the present application includes the following steps:
a turning-on step: controlling a light source to turn it on based on a closing signal of a storage room;
a humidity obtaining step: obtaining a humidity of the storage room after a first preset duration; and
a controlling step: when the humidity of the storage room is greater than a target humidity, controlling a humidity control fan to operate in a normal mode and turning off the light source after a second preset duration.

In the method for improving nutrients in food ingredient provided by the examples of the present application, after the light source is controlled to turn on based on the closing signal of the storage room, food ingredient in the storage room can be determined to be fruit or vegetable based on the humidity of the storage room, the humidity control fan can be controlled to operate in the normal mode, and the fruit and vegetable can kept to be irradiated by the light source, thereby increasing the content of the corresponding nutrients in the fruits and vegetables.

In an example, the controlling step further includes the following steps: when the humidity of the storage room is not greater than the target humidity, controlling the humidity control fan to operate in a low humidity mode and turning off the light source.

In an example, the target humidity is determined based on historical data or the humidity of the storage room prior to the turning-on step.

In an example, after the turning-on step, the method further includes the following steps:
turning-off step: controlling the light source to turn off after a third preset duration based on an opening signal of the storage room.

In an example, between the humidity obtaining step and the controlling step, the method further includes the following steps:
a first determining step: when the humidity of the storage room is greater than the target humidity, determining a target irradiation intensity and a target irradiation duration for the food ingredient; and
a setting step: setting the target irradiation intensity as an irradiation intensity of the light source, and setting the target irradiation duration as the second preset duration.

The first determining step includes:
when the humidity of the storage room is greater than the target humidity, obtaining a type of the food ingredient in the storage room based on an image of the food ingredient;
determining a minimum irradiation intensity and a shortest irradiation duration required by the type of the food ingredient based on the type of the food ingredient; and
determining the target irradiation intensity and the target irradiation duration based on the minimum irradiation intensity and the shortest irradiation duration.

In an example, determining the target irradiation intensity and the target irradiation duration based on the minimum irradiation intensities and the shortest irradiation durations includes:
when only one type of food ingredient is in the storage room, setting the minimum irradiation intensity as the target irradiation intensity, and setting the shortest irradiation duration as the target irradiation duration; and
when a plurality of types of food ingredients are in the storage room, setting the maximum value of all the minimum irradiation intensities of the plurality of types of food ingredients as the target irradiation intensity, and setting the maximum value of all the shortest irradiation durations of all of the plurality of types of food ingredients as the target irradiation duration.

In an example, when a plurality of types of food ingredients are in the storage room, between the setting step and the controlling step, the method further includes the following steps:
re-obtaining current types of food ingredients in the storage room based on the closing signal of the storage room;
when the current types of food ingredients are less than the types of food ingredients prior to the setting step, obtaining the minimum irradiation intensity and the shortest irradiation duration corresponding to removed types of food ingredients;
when the minimum irradiation intensity required by the removed type of food ingredient is greater than the minimum irradiation intensity of each current type of food ingredient, updating the target irradiation intensity set in the setting step to the maximum value of all the minimum irradiation intensities corresponding to all the current types of food ingredients;
when the shortest irradiation duration required by the removed type of food ingredient is greater than the shortest irradiation duration of each current type of food ingredient, obtaining a duration that the light source has been turned on; and
when the duration that the light source has been turned on is less than the maximum value of all the shortest irradiation durations corresponding to all the current types of food ingredients, updating the target irradiation duration set in the setting step to the maximum value of all the shortest irradiation durations corresponding to all the current types of food ingredients.

In an example, when a plurality of types of food ingredients are in the storage room, between the setting step and the controlling step, the method further includes the following steps:
when the current types of food ingredients are more than the types of food ingredients prior to the setting step, obtaining the minimum irradiation intensity and the shortest irradiation duration corresponding to an additional type of food ingredient;
when the minimum irradiation intensity required by the additional type of food ingredient is greater than all the minimum irradiation intensities corresponding to all the types of food ingredients prior to the setting step, updating the target irradiation intensity in the setting step to the minimum irradiation intensity corresponding to the additional type of food ingredients; and
when the shortest irradiation duration required by the additional type of food ingredients is greater than all the shortest irradiation duration corresponding to all the types of food ingredients prior to the setting step, restarting timing, and updating the target irradiation duration set in the setting step to the shortest irradiation duration corresponding to the additional type of food ingredient.

In an example, the first determining step includes:
obtaining an input irradiation intensity and an input irradiation duration manually input by a user; and
setting the input irradiation intensity as the target irradiation intensity, and setting the input irradiation duration as the target irradiation duration.

In an example, the target irradiation intensity is not greater than 100 µmol·m⁻²·s⁻¹, and the target irradiation duration is not greater than 120 h.

In an example, after the controlling step, the method further includes the following steps:
a second determining step: determining a storage duration of the food ingredient in the storage room; and
a prompting step: when the storage duration is not less than a first preset storage duration, sending a tasting prompt instruction, where the first preset storage duration is not less than the second preset duration.

In an example, the prompting step further includes the following steps:
when the storage duration is equal to a second preset storage duration, sending a prompt instruction indicating an expiration of a best tasting period, where the first preset storage duration is less than the second preset storage duration.

In an example, the first preset storage duration and the second preset storage duration are determined based on historical data and/or type of food ingredient.

In an example, the light source includes a blue light source, and the blue light emitted by the blue light source has a wavelength of 440 nm to 460 nm.

The example of the present application further provides a controlling device for improving nutrients in food ingredient, including:
a turning-on module, configured to control a light source to turn on based on a closing signal of a storage room;
a humidity obtaining module, configured to obtain a humidity of the storage room after a first preset duration; and
a controlling module, configured to control a humidity control fan to operate in a normal mode and turn off the light source after a second preset duration when the humidity of the storage room is greater than a target humidity.

An example of the present application further provides a storage cabinet, including a cabinet body, a light source, a humidity detector, and the above-mentioned controlling device for improving nutrients in a food ingredient, where a storage room is formed in the cabinet body, the light source and the humidity detector is provided in the storage room, the light source is in communication with the turning-on module and the controlling module respectively, and the humidity detector is in communication with the humidity obtaining module.

Examples of the present application further provide an electronic device, including a communication interface, a processor and a memory storing computer program that is executable on the processor, wherein the computer program, when executed by the processor, causes the processor to perform the steps of the above-mentioned method for improving nutrients in a food ingredient.

Examples of the present application further provide a computer readable storage medium having a computer program stored thereon, wherein the computer program, when executed by a processor, causes the processor to perform the steps of the above-mentioned method for improving nutrients in a food ingredient.

### BRIEF DESCRIPTION OF DRAWINGS

In order to more clearly illustrate solutions disclosed in the examples of the present application or the related art, the drawings used in the descriptions of the examples or the related art will be briefly described below. The drawings in the following description are only certain examples of the present application, and other drawings can be obtained according to these drawings without creative work for those skilled in the art.
FIG. 1 is a schematic flow chart of a method for improving nutrients in food ingredients provided by the present application;
FIG. 2 is another schematic flow chart of a method for improving nutrients in food ingredients provided by the present application;
FIG. 3 is a schematic structural diagram of a storage cabinet provided by the present application;
FIG. 4 is a schematic perspective diagram of a storage room provided by the present application; and
FIG. 5 is a schematic structural diagram of an electronic device provided by the present application.

Reference numerals:
100: storage cabinet; 200: storage room; 300: light source; 400: identification probe; 500: fruits and vegetables; 600: human-computer interaction display screen; 810: processor; 820: communication interface; 830: memory; 840: communication bus.

### DETAILED DESCRIPTION OF THE EMBODIMENTS

To more clearly illustrate the above-mentioned objectives, features and advantages of the examples of the present application, the examples of the present application will be described in further detail below in conjunction with the accompanying drawings and specific examples. It should be noted that the examples of the present application and the features in the examples can be combined with each other without conflict.

In the description of the present application, it should be noted that, the orientation or positional relations specified by terms, such as "central", "longitudinal", "horizontal", "upper", "lower", "front", "back", "left", "right", "vertical", "horizontal", "top", "bottom", "inner", "outer" and the like, are based on the orientation or positional relations shown in the drawings, which is merely for convenience of description of the present application and to simplify description, but does not indicate or imply that the stated devices or components must have a particular orientation and be constructed and operated in a particular orientation, and thus it is not to be construed as limiting the present application. Furthermore, the terms "first", "second", "third" and the like are only used for descriptive purposes and should not be construed as indicating or implying a relative importance.

In the description of the present application, it should be noted that unless explicitly specified and defined otherwise, the terms "connected to" and "connected" shall be understood broadly, for example, it can be either fixedly connected or detachably connected, or can be integrated; it can be either mechanically connected, or electrically connected; it can be either directly connected, or indirectly connected through an intermediate medium. The specific meanings of the terms above in the present application can be understood by a person skilled in the art in accordance with specific conditions.

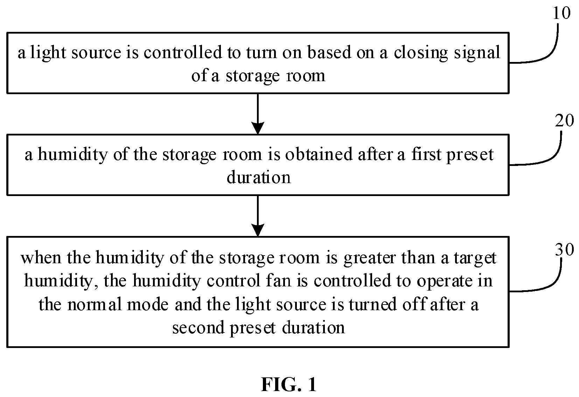

As shown in FIG. 1, FIG. 3 and FIG. 4, the method for improving nutrients in food ingredients according to the examples of the present application includes the following steps.

In step 10 (that is, a turning-on step), a light source 300 is controlled to turn on based on a closing signal of a storage room 200.

In step 20 (that is, a humidity obtaining step), a humidity of the storage room 200 is obtained after a first preset duration. The first preset duration can be, but is not limited to, 20 min to 60 min.

In step 30 (that is, a controlling step), when the humidity of the storage room 200 is greater than a target humidity, it means that the food ingredients put into the storage room 200 are fruits and vegetables 500, the humidity control fan is controlled to operate in the normal mode, and the light source 300 is turned off after a second preset duration. The second preset duration can be, but is not limited to, 2 h. In addition, the target humidity can be determined based on, but is not limited to, historical data or the humidity of the storage room 200 prior to performing the turning-on step. For example, the target humidity can be a preset humidity value 80%, or can be a humidity obtained by adding 5% on the basis of the humidity of the storage room 200 prior to performing the turning-on step.

Taking improving anthocyanidin of the fruits and vegetables 500 as an example, the method for improving nutrients in food ingredients provided by the examples of the present application will be described in the following.

Anthocyanidin, also known as anthocyanin, is not only a flavonoid compound with a C6-C3-C6 skeleton structure, but also a water-soluble natural pigment that widely exists in plants. Therefore, some fruits and vegetables 500 with high anthocyanin content tend to have darker colors, such as strawberries, cherries, blueberries, cherry tomatoes, bayberry and other berry/drupe fruits. Anthocyanins have important physiological functions such as anti-oxidation, anti-inflammatory, anti-cancer, anti-aging, protection of eyesight and prevention of cardiovascular diseases, and have high nutritional value. Studies found that using blue light to irradiate fruit and vegetables 500 can not only activate the enzymatic activity of key regulatory enzymes in the metabolic pathway of the anthocyanin in fruits and vegetables 500, but also enhance the transcription level of the corresponding genome of the anthocyanin metabolic pathway. Therefore, in order to increase the content of anthocyanin in the fruits and vegetables 500, the light source 300 in this example can use a blue light source, and the blue light wavelength emitted by the blue light source can be, but is not limited to, 440 nm to 460 nm. In addition, the storage room 200 here can be, but is not limited to, a compartment of a refrigerating chamber in a refrigerator or a drawer in a refrigerating chamber of a refrigerator.

For example, after a user puts the fruits and vegetables 500 into the drawer of the refrigerating room, based on the closing signal of the drawer, the blue light source is controlled to turn on immediately, and the humidity of the drawer is obtained after 20 minutes. If the food ingredients that the user puts into the drawer are fruits and vegetables 500, the fruits and vegetables 500 will increase the humidity of the air in the drawer, which makes the humidity of the drawer higher than the target humidity. Therefore, based on the fact that the humidity of the drawer is greater than the target humidity, it can be determined that the food ingredients put into the drawer by the user are fruits and vegetables 500, and then the humidity control fan is controlled to operate in the normal mode, and the blue light source continues to irradiate the fruits and vegetables 500 in the drawer. Under the irradiation of blue light, the enzymatic activity of key regulatory enzymes in the metabolic pathway of the anthocyanin in fruits and vegetables 500 and the corresponding gene transcription level gradually increased, so that the anthocyanin content in fruits and vegetables 500 is increased. When the irradiation time of the blue light source reaches 2 hours, the blue light source is turned off.

It should be noted that when the types of the light sources 300 are different, the lights emitted by the light sources 300 have different improving effects on different nutrients in the fruits and vegetables 500, such as anthocyanins, chlorophyll, reducing sugars, vitamins, etc. Therefore, the light source 300 in the examples of the present application can be, but is not limited to, blue light source and/or red light source.

It can be seen from the above that after the light source is controlled to turn on based on the closing signal of the storage room 200, it can be determined that the food ingredients put into the storage room 200 are fruits and vegetables 500 based on the humidity of the storage room, and in this case, the humidity control fan can be controlled to operate in the normal mode, and the fruits and vegetables 500 is kept to be irradiated by the light source 300, thereby the content of the corresponding nutrients in the fruits and vegetables 500 can be increased.

Considering that the food ingredients that the user puts into the storage room 200 are not limited to fruits and vegetables 500, but can also be dry goods such as dried fruits and vegetables, and the dry goods do not need light, and the dry goods will not increase the humidity of the storage room 200 after being put into the storage room 200. Therefore, in order to save energy, the above step 30 can further include the following steps: when the humidity of the storage room 200 is not greater than the target humidity, it means that the food ingredients put into the storage room 200 are not fruits and vegetables 500 and may be dry goods, in this case the humidity control fan can be controlled to operate in a low humidity mode and the light source 300 can be turned off.

In addition, in order to prevent the user from being affected by the light emitted by the light source 300 when the user takes food ingredients from the storage room 200 during the operation of the light source 300, after performing the step 10, it further includes a turning-off step: the light source 300 is controlled to turn off after a third preset duration based on an opening signal of the storage room 200. The value range of the third preset duration can be 0 s to 5 s. For example, if the value of the third preset duration is 0 s, it means that when it is detected that the storage room 200 is opened, the light source 300 will be turned off synchronously. If the value of the third preset duration is 3 s, it means that after detecting that the storage room 200 is opened, the light source 300 needs to be turned off after a delay of 3 s.

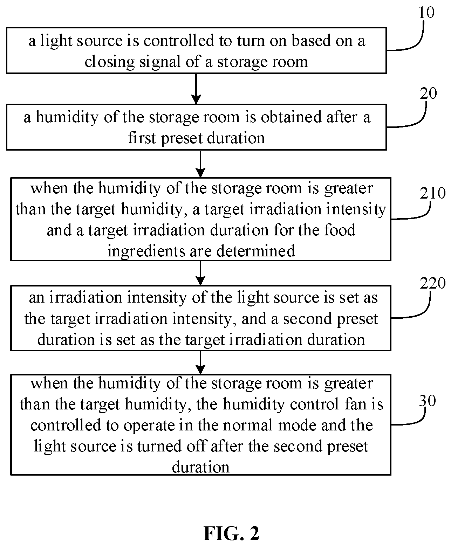

In addition, since different types of fruits and vegetables 500 have different irradiation requirements, in order to meet the irradiation requirements of the fruits and vegetables 500, as shown in FIG. 2, between the step 20 and the step 30, it further includes the following steps.

In step 210 (that is, a first determining step), when the humidity of the storage room 200 is greater than the target humidity, that is, after determining that the food ingredients put into the storage room 200 are fruits and vegetables 500, a target irradiation intensity and a target irradiation duration for the food ingredients (that is, fruits and vegetables 500) are determined.

In step 220 (that is, a setting step), an irradiation intensity of the light source 300 is set as the target irradiation intensity, and the second preset duration is set as the target irradiation duration.

It should be noted that the target irradiation intensity and target irradiation duration in step 210 can be determined in various ways, for example, it can be determined by the following ways.

Way 1: intelligent identification, including the following steps. The type of the food ingredients (that is, fruits and vegetables 500) put into the storage room 200 is obtained based on an image of the food ingredients, which can be realized by means of an identification probe 400 mounted in the storage room 200, such as a camera. A minimum irradiation intensity and a shortest irradiation duration required by the food ingredients with this type are determined based on this type. A target irradiation intensity and a target irradiation duration are determined based on the minimum irradiation intensity and a shortest irradiation duration. In the case where there is one type of food ingredient, the minimum irradiation intensity corresponding to this type of food ingredient is set as the target irradiation intensity, and the shortest irradiation duration corresponding to this type of food ingredient is set as the target irradiation duration. In the case where there are a plurality of types of food ingredients, the maximum value of all the minimum irradiation intensities corresponding to these types of food ingredients is set as the target irradiation intensity, and the maximum value of all the shortest irradiation durations corresponding to these types of food ingredients is set as the target irradiation duration.

In order to quickly determine the corresponding minimum irradiation intensity and shortest irradiation duration based on the type of food ingredient, a relationship table of type of fruit and vegetable - irradiation intensity - irradiation duration obtained through experiments can be pre-stored. The relationship table can also include a corresponding nutrient improving rate and a recommended tasting period. The nutrient improving rate generally refers to the increment of the nutrient content in the fruits and vegetables 500 after 24 hours from the beginning of the irradiation compared with that before the irradiation.

The following takes the types of fruits and vegetables 500 in table 1 as an example to illustrate the method for improving nutrients in food ingredients when adopting the way 1.

**Table 1 The relationship between type of fruit and vegetable - irradiation intensity - irradiation duration - improving rate of anthocyanin - recommended tasting period**

| Type of fruit and vegetable | Irradiation intensity (µmol·m⁻²·s⁻¹) | Irradiation duration (h) | Improving rate of anthocyanidin (%) | Recommended tasting period (d) |
|---|---|---|---|---|
| Cherry | ≥80 | ≥4 | ≥20% | 1~2 d |
| Strawberry | ≥50 | ≥2 | ≥36% | 1~2 d |
| Blueberry (pericarp) | ≥80 | ≥3 | ≥50% | 1~3 d |
| Cherry tomato | ≥15 | ≥6 | ≥25% | 1~3 d |
| Apple | ≥65 | ≥8 | ≥15% | 1~5 d |

It is assumed that the type of food ingredient put into the storage room 200 is only cherry, then the method includes the following steps. In s1, the light source 300 is controlled to turn on based on the closing signal of the storage room 200. In s2, the humidity of the storage room 200 is obtained after a first preset duration, such as 20 minutes. In s3, since the cherry is one of the fruits and vegetables 500, which will increase the humidity of the storage room 200 after being put into the storage room 200, the humidity of the storage room 200 is greater than the target humidity, and then the type of the food ingredient put into the storage room 200 is obtained through the identification probe 400 in the storage room 200. In s4, it can be determined by querying the table 1 that the minimum irradiation intensity required for cherry is 80 µmol·m⁻²·s⁻¹, and the required shortest irradiation duration is 4 h. In s5, 80 µmol·m⁻²·s⁻¹ is set as the target irradiation intensity, and 4 h is set as the target irradiation duration. The advantage of setting like this is that when the irradiation intensity and irradiation duration of fruits and vegetables 500 reach the minimum values of the corresponding irradiation intensity and irradiation duration in table 1, it has the best improving effect of the nutrients in food ingredients, and continuous increase of the irradiation intensity or the irradiation duration will slow down the improving effect. In s6, the irradiation intensity of the light source 300 is set to 80 µmol·m⁻²·s⁻¹ (that is, the target irradiation intensity), and the second preset duration is set to 4 h (that is, the target irradiation duration). In s7, the light source 300 is controlled to irradiate the cherry in the storage room 200 for 4 hours with the irradiation intensity of 80 µmol·m⁻²·s⁻¹, and the humidity control fan is controlled to operate in the normal mode. Therefore, under the irradiation of the light source 300, the nutrient content in the cherry gradually increases.

It is assumed that the types of food ingredients put into the storage room 200 at the same time are apple, strawberry and cherry tomato, then the method includes the following steps. In s1, the light source 300 is controlled to turn on based on the closing signal of the storage room 200. In s2, the humidity of the storage room 200 is obtained after a first preset duration, such as 30 minutes. In s3, since the apple, strawberry and cherry tomato are fruits and vegetables 500, which will increase the humidity of the storage room 200 after being put into the storage room 200, the humidity of the storage room 200 is greater than the target humidity, and then the types of the food ingredients put into the storage room 200 are obtained through the identification probe 400 in the storage room 200. In s4, it can be determined by querying the table 1 that the minimum irradiation intensity required for apple is 65 µmol·m⁻²·s⁻¹ and the required shortest irradiation duration is 8 h, the minimum irradiation intensity required for strawberry is 50 µmol·m⁻²·s⁻¹ and the required shortest irradiation duration is 2 h, and the minimum irradiation intensity required for cherry tomato is 15 µmol·m⁻²·s⁻¹ and the required shortest irradiation duration is 6 h. In s5, the maximum value 65 µmol·m⁻²·s⁻¹ among the above three minimum irradiation intensities is set as the target irradiation intensity, the maximum value 8 h among the above three shortest irradiation durations is set as the target irradiation duration. In s6, the irradiation intensity of the light source 300 is set to 65 µmol·m⁻²·s⁻¹ (that is, the target irradiation intensity), and the second preset duration is set to 8 h (that is, the target irradiation duration). In s7, the light source 300 is controlled to irradiate the apple, strawberry and cherry tomato in the storage room 200 for 8 hours with the irradiation intensity of 65 µmol·m⁻²·s⁻¹, and the humidity control fan is controlled to operate in the normal mode. Therefore, under the irradiation of the light source 300, the nutrient contents in the apple, strawberry and cherry tomato gradually increase.

In addition, considering that the user may take out the fruits and vegetables 500 from the storage room 200 halfway, in the case where there are a plurality of types of the food ingredients, it can further include the following steps between the setting step and the controlling step: current types of the food ingredients in the storage room 200 are re-obtained based on the closing signal of the storage room 200; when it is determined that the current types of the food ingredients are less than the types of the food ingredients prior to performing the setting step, the minimum irradiation intensity and the shortest irradiation duration corresponding to the types of the removed food ingredients are obtained; when it is determined that the minimum irradiation intensity required by the types of the removed food ingredients is greater than all the minimum irradiation intensities corresponding to all the current types of the food ingredients, the target irradiation intensity in the setting step is updated to the maximum value of all the minimum irradiation intensities corresponding to all the current types of the food ingredients; when it is determined that the shortest irradiation duration required by the types of the removed food ingredients is greater than all the shortest irradiation durations corresponding to all the current types of food ingredients, a duration that the light source 300 has been turned on is obtained; and when it is determined that the duration that the light source 300 has been turned on is less than the maximum value of all the shortest irradiation durations corresponding to all the current types of the food ingredients, the target irradiation duration in the setting step is updated to the maximum value of all the shortest irradiation durations corresponding to all the current types of the food ingredients.

The fruits and vegetables 500, namely apple, strawberry and cherry tomato, are still used as an example. It is assumed that the apple is taken out when the target irradiation duration has not been reached, in this case, it can further include the following steps after performing the setting step: current types of food ingredients in the storage room are re-obtained based on the closing signal of the storage room 200; when it is determined that the type of the removed food ingredient in the storage room 200 is apple compared with the types of food ingredients in the storage room 200 prior to performing the setting step, it can be determined by querying the table 1 that the minimum irradiation intensity required for apple is 65 µmol·m⁻²·s⁻¹ and the required shortest irradiation duration is 8 h; since the remaining fruits and vegetables 500 in the current storage room 200 are strawberry and cherry tomato, the minimum irradiation intensity required for strawberry is 50 µmol·m⁻²·s⁻¹, the minimum irradiation intensity required for cherry tomato is 15 µmol·m⁻²·s⁻¹, and the minimum irradiation intensity required for the removed apple is 65 µmol·m⁻²·s⁻¹, the target irradiation intensity in the setting step can be updated from 65 µmol·m⁻²·s⁻¹ to 50 µmol·m⁻²·s⁻¹; since the shortest irradiation duration required for strawberry is 2 h, the shortest irradiation duration required for cherry tomato is 6 h, and the shortest irradiation duration required for the removed apple is 6 h, the duration that the light source 300 has been turned on can be obtained first: when the duration that the light source 300 has been turned on is equal to or greater than 6 h, there is no need to update the target irradiation duration in the setting step; and when the duration that the light source 300 has been turned on is less than 6 h, the target irradiation duration in the setting step can be updated from 8 h to 6 h.

Similarly, the user can not only take out the fruits and vegetables 500 from the storage room 200 halfway, but also can place new fruits and vegetables 500 into the storage room 200. In the case where there are a plurality of types of food ingredients, between performing the setting step and the controlling step, the method further includes the following steps: when it is determined that the current types of food ingredients are more than the types of food ingredients prior to performing the setting step, the minimum irradiation intensity and the shortest irradiation duration corresponding to the additional type of food ingredient are obtained; when it is determined that the minimum irradiation intensity required by the additional type of food ingredient is greater than the minimum irradiation intensities corresponding to all the types of food ingredients prior to performing the setting step, the target irradiation intensity in the setting step is updated to the minimum irradiation intensity corresponding to the additional type of food ingredient; and when it is determined that the shortest irradiation duration required by the additional type of food ingredient is greater than the shortest irradiation durations corresponding to all the types of food ingredients prior to performing the setting step, timing is restarted, and the target irradiation duration in the setting step is updated to the shortest irradiation duration corresponding to the additional type of food ingredient.

The fruits and vegetables 500, namely apple, strawberry and cherry tomato, are still used as an example. It is assumed that the fruits and vegetables 500 previously placed in the storage room 200 are strawberry and cherry tomato, it can be seen from table 1 that the target irradiation intensity in this case is 50 µmol·m⁻²·s⁻¹, the target irradiation duration is 6 h. If the user supplements apple in the storage room 200 when the target irradiation duration is not reached for 6 h, the method further includes the following steps after performing the controlling step in this case: current types of food ingredients in the storage room 200 are re-obtained based on the closing signal of the storage room 200; it is determined that the types of food ingredients in the storage room 200 is increased by supplemented apple compared with the types of food ingredients in the storage room 200 prior to performing the controlling step; it can be determined by querying the table 1 that the minimum irradiation intensity required for apple is 65 µmol·m⁻²·s⁻¹ and the required shortest irradiation duration is 8 h; since the fruits and vegetables 500 in the storage room 200 are strawberry and cherry tomato prior to performing the setting step, the minimum irradiation intensity required for strawberry is 50 µmol·m⁻²·s⁻¹, the minimum irradiation intensity required for cherry tomato is 15 µmol·m⁻²·s⁻¹, and the minimum irradiation intensity required for the supplemented apple is 65 µmol·m⁻²·s⁻¹, the target irradiation intensity in the setting step can be updated from 50 µmol·m⁻²·s⁻¹ to 65 µmol·m⁻²·s⁻¹; and at the same time, since the shortest irradiation duration required for strawberry is 2 h, the shortest irradiation duration required for cherry tomato is 6 h, and the shortest irradiation duration required for the supplemented apple is 6 h, the timing can be restarted, and the target irradiation duration in the setting step can be updated from 6 h to 8 h.

Way 2: manual identification, for example, including the following steps: an input irradiation intensity and an input irradiation duration manually input by a user are obtained; and the input irradiation intensity is set as the target irradiation intensity, and the input irradiation duration is set as the target irradiation duration. In order to help the user to input more accurate input irradiation intensity and input irradiation duration according to the types of food ingredients, a description including a table similar to table 1 can be provided to the user. The description can specify that when the irradiation intensity and irradiation duration of fruits and vegetables 500 reached the minimum value of the corresponding irradiation intensity and irradiation duration in table 1, it has the best improving effect on the nutrients in food ingredients, and continuously increasing of the irradiation intensity and irradiation duration will slow down the improving effect. Therefore, in the case where only one of the types of fruits and vegetables 500 is stored, the minimum irradiation intensity and the shortest irradiation duration required for this type of food ingredient in table 1 can be input. In the case where there are a plurality of types of fruits and vegetables 500 being stored, the maximum value of the minimum irradiation intensities and the maximum value of the shortest irradiation durations corresponding to the types of fruits and vegetables 500 being stored in table 1 can be input.

It should be noted that, if the irradiation intensity of the light source 300 on the fruits and vegetables 500 is greater than 100 µmol·m⁻²·s⁻¹ or the irradiation time is longer than 120 h, the fruits and vegetables 500 will shrink to a certain extent, so the target irradiation intensity can be no more than 100 µmol·m⁻²·s⁻¹, and the target irradiation time can be no more than 120 h.

In order to enable the user to enjoy the fruits and vegetables 500 in a better state, after performing the controlling step, the method further includes the following steps:
a second determining step: a storage duration of the fruits and vegetables 500 in the storage room 200 is determined; and
a prompting step: when it is determined that the storage duration is not less than a first preset storage duration, which means that the content of the corresponding nutrients in the fruits and vegetables 500 has reached a better level, a tasting prompt instruction can be sent to remind the user to enjoy the fruits and vegetables 500 in time, where the first preset storage duration is not less than the second preset duration, and the first preset storage duration can be determined based on historical data and/or types of food ingredients. In addition, the tasting prompt instruction can be, but is not limited to, activating a buzzer, a digital display, or a prompting light.

In order to prevent the user from forgetting to enjoy the fruits and vegetables 500 in time to avoid affecting the subsequent enjoying experience, the prompting step can further include the following steps: when it is determined that the storage duration is equal to a second preset storage duration, a prompt instruction indicating an expiration of a best tasting period is sent. The first preset storage duration is less than the second preset storage duration. The second preset storage duration can be determined based on historical data and/or types of food ingredients. For example, the minimum value of the recommended tasting period in table 1 can be selected as the first preset storage duration, and the maximum value of the recommended tasting period in table 1 can be selected as the second preset storage duration.

The example of the present application further provides a controlling device for improving nutrients in food ingredients. The controlling device includes a turning-on module, a humidity obtaining module and a controlling module. The turning-on module is configured to control a light source 300 to turn on based on a closing signal of a storage room 200. The humidity obtaining module is configured to obtain a humidity of the storage room 200 after a first preset duration. The controlling module is configured to control a humidity control fan to operate in a normal mode and turn off the light source 300 after a second preset duration in the case where the humidity of the storage room is greater than a target humidity.

In an example, the controlling module is further configured to control the humidity control fan to operate in a low humidity mode and turn off the light source 300 in the case where the humidity of the storage room is not greater than the target humidity.

In addition, the controlling device for improving nutrients in food ingredients further includes a turning off module, a first determining module, a second determining module, a setting module and a prompting module. The first determining module is configured to determine a target irradiation intensity and a target irradiation duration of the food ingredients in the case where the humidity of the storage room 200 is greater than the target humidity. The setting module is configured to set an irradiation intensity of the light source 300 as the target irradiation intensity, and set a second preset duration as the target irradiation duration. The second determining module is configured to determine a storage duration of the fruits and vegetables 500 in the storage room 200. The prompting module is configured to send a tasting prompt instruction when it is determined that the storage duration is not less than a first preset storage duration, where the first preset storage duration is not less than the target irradiation duration.

In an example, the prompting module is further configured to send a prompt instruction indicating an expiration of a best tasting period when it is determined that that the storage duration is equal to the second preset storage duration, where the first preset storage duration is less than the second preset storage duration.

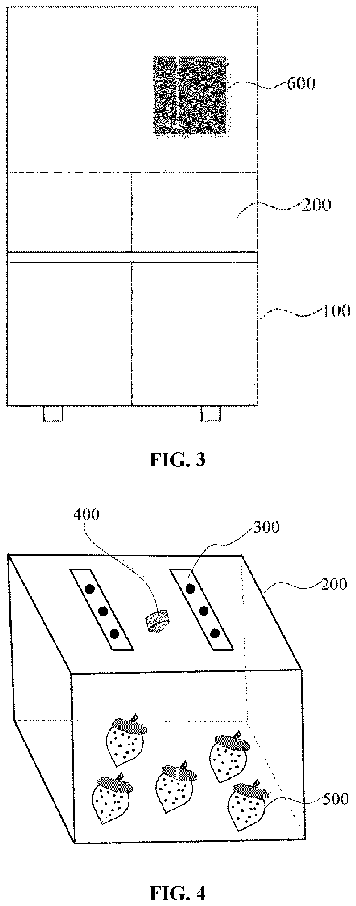

As shown in FIG. 3, an example of the present application further provides a storage cabinet 100, the storage cabinet 100 includes a cabinet body, a light source 300, a humidity detector, and the above-mentioned controlling device for improving nutrients in food ingredients. A storage room 200 is formed in the cabinet body, the light source 300 and the humidity detector is provided in the storage room 200, the light source 300 is in communication with the turning-on module and the controlling module respectively, and the humidity detector is in communication with the humidity obtaining module. The light source 300 can be, but is not limited to, the blue light source 300, and the storage cabinet 100 can be, but is not limited to, a refrigerator.

In order to realize intelligent identification of types of food ingredients, the storage cabinet 100 further includes an identification probe 400 provided in the storage room 200. The identification probe 400 is in communication with the first determining module and is configured to identify the types of food ingredients in the storage room 200. The identification probe 400 can be, but is not limited to, a camera.

In an example, it can be identified manually. In this way, an outer wall of the cabinet body can be provided with an input button of types of food ingredients, an input button of target irradiation intensity, and an input button of target irradiation duration that are respectively in communication with the first determining module. Based on the provided description, types of food ingredients, minimum irradiation intensity and shortest irradiation duration required for the types of food ingredients can be input respectively through the input button of types of food ingredients, the input button of target irradiation intensity and the input button of target irradiation duration. The input button of types of food ingredients, the input button of target irradiation intensity and the input button of target irradiation duration can be integrated into a human-computer interaction display screen 600.

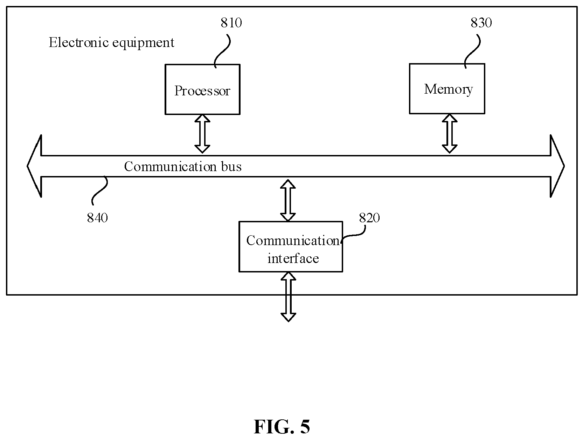

FIG. 5 is a schematic structural diagram of an electronic device provided by the present application. As shown in FIG. 5, the electronic device can include: a processor 810, a communication interface 820, a memory 830, and a communication bus 840. The processor 810, the communication interface 820, and the memory 830 communicate with each other through the communication bus 840. The processor 810 can call the logic instructions in the memory 830 to perform the steps of the above-mentioned method for improving nutrients in food ingredients.

In addition, the above-mentioned logic instructions in the memory 830 can be implemented in the form of software functional units and can be stored in a computer readable storage medium when sold or used as an independent product. Based on this understanding, the solutions of the present application or the part that contributes to the related art or the part of the solutions can be embodied in the form of a software product in essence. The computer software product can be stored in a storage medium, including several instructions used to cause a computer device (which can be a personal computer, a server, or a network device, etc.) to execute all or part of the steps of the methods of the various examples of the present application. The aforementioned storage medium includes: USB flash memory, mobile hard disk, read-only memory (ROM), random access memory (RAM), magnetic disk or optical disk and other media that can store program codes.

The present application further provides a computer program product, the computer program product includes a computer program stored on a non-transitory computer readable storage medium, the computer program includes program instructions, and when the program instructions are executed by a computer, the computer can implement the steps of the above-mentioned method for improving nutrients in food ingredients.

The present application further provides a non-transitory computer readable storage medium on which a computer program is stored, where the computer program, when executed by a processor, causes the processor to implement the steps of the above-mentioned method for improving nutrients in food ingredients.

The device examples described above are only illustrative, the units described as separate components may or may not be physically separated, and the components shown as units may or may not be physical units, that is, they may be located in one place, or distributed to multiple network elements. Some or all of the modules may be selected according to actual needs to achieve the purpose of the solution in these examples. Those of ordinary skill in the art can understand and implement it without creative effort.

From the description of the above examples, those skilled in the art can clearly understand that each example can be implemented by means of software plus a necessary general hardware platform, and certainly can also be implemented by hardware. Based on this understanding, the solutions of the present application or the part that contributes to the related art can be embodied in the form of a software product in essence, and the computer software products can be stored in computer readable storage media, such as ROM/RAM, magnetic discs, optical discs, etc., including several instructions to cause a computer device (which can be a personal computer, server, or network device, etc.) to perform the methods of various examples or portions of examples.

The invention is defined by the subject-matter of the claims.

## Claims

1. A method for improving nutrients in a food ingredient, comprising the following steps:
a turning-on step: controlling a light source (300) to turn on based on a closing signal of a storage room (200);
a humidity obtaining step: obtaining humidity in the storage room (200) after a first preset duration;
a first determining step: when humidity in the storage room (200) is greater than a target humidity, determining a target irradiation intensity value and a target irradiation duration for all the food ingredients in the storage room (200) by:
when humidity in the storage room (200) is greater than the target humidity, obtaining a type of the food ingredient in the storage room (200) based on an image of each food ingredient,
determining a minimum irradiation intensity value and a shortest irradiation duration required by the type of the food ingredient by mapping the type of the food ingredient against a relationship table, the relationship table storing irradiation intensity values and irradiation durations against types of food ingredients, and
determining the target irradiation intensity value and the target irradiation duration based on comparison of the minimum irradiation intensity values and the shortest irradiation durations of all the food ingredients in the storage room;
a setting step: setting the target irradiation intensity value as an irradiation intensity value of the light source (300), and setting the target irradiation duration as a second preset duration; and
a controlling step: when humidity in the storage room (200) is greater than a target humidity, controlling a humidity control fan to operate in a normal mode and turning off the light source (300) after the second preset duration.

2. The method according to claim 1, wherein the controlling step further comprises the following steps: when humidity in the storage room (200) is not greater than the target humidity, controlling the humidity control fan to operate in a low humidity mode and turning off the light source (300).

3. The method according to claim 1, wherein the target humidity is determined based on historical data or humidity in the storage room (200) prior to the turning-on step.

4. The method according to claim 1, after the turning-on step, further comprising the following step:
a turning-off step: controlling the light source (300) to turn off after a third preset duration based on an opening signal of the storage room (200).

5. The method according to claim 1, wherein determining the target irradiation intensity value and the target irradiation duration comprises:
when only one type of food ingredient is in the storage room (200), setting the minimum irradiation intensity value as the target irradiation intensity value, and setting the shortest irradiation duration as the target irradiation duration; and
when a plurality of types of food ingredients are in the storage room (200), setting the maximum of all the minimum irradiation intensity values of the plurality of types of food ingredients as the target irradiation intensity value, and setting the maximum value of all the shortest irradiation durations of all of the plurality of types of food ingredients as the target irradiation duration.

6. The method according to claim 5, further comprising the following steps between the setting step and the controlling step when a plurality of types of food ingredients are in the storage room (200):
re-obtaining a current type of food ingredient in the storage room (200) based on the closing signal of the storage room (200);
when a total number of current types of food ingredients in the storage room (200) is less than a total number of types of food ingredients in the storage room (200) prior to the setting step, obtaining the minimum irradiation intensity value and the shortest irradiation duration corresponding to a removed type of food ingredient;
when the minimum irradiation intensity value required by the removed type of food ingredient is greater than the minimum irradiation intensity value of each current type of food ingredient, updating the target irradiation intensity value set in the setting step to the maximum value of all the minimum irradiation intensities corresponding to all the current types of food ingredients;
when the shortest irradiation duration required by the removed type of food ingredient is greater than the shortest irradiation duration of each current type of food ingredient, obtaining a duration that the light source (300) has been turned on; and
when the duration that the light source (300) has been turned on is less than the maximum value of all the shortest irradiation durations corresponding to all the current types of food ingredients, updating the target irradiation duration set in the setting step to the maximum value of all the shortest irradiation durations corresponding to all the current types of food ingredients.

7. The method according to claim 6, further comprising the following steps between the setting step and the controlling step when a plurality of types of food ingredients are in the storage room (200):
when a total number of the current types of food ingredients in the storage room (200) are more than a total number of the types of food ingredients in the storage room (200) prior to the setting step, obtaining the minimum irradiation intensity value and the shortest irradiation duration corresponding to an additional type of food ingredient;
when the minimum irradiation intensity value required by the additional type of food ingredients is greater than all the minimum irradiation intensities corresponding to all the types of food ingredients prior to the setting step, updating the target irradiation intensity value in the setting step to the minimum irradiation intensity value corresponding to the additional type of food ingredient; and
when the shortest irradiation duration required by the additional type of food ingredient is greater than all the shortest irradiation durations corresponding to all the types of food ingredients prior to the setting step, restarting timing, and updating the target irradiation duration set in the setting step to the shortest irradiation duration corresponding to the additional type of food ingredient.

8. The method according to claim 1, wherein the first determining step comprises:
obtaining an input irradiation intensity value and an input irradiation duration manually input by a user; and
setting the input irradiation intensity value as the target irradiation intensity value, and setting the input irradiation duration as the target irradiation duration, or, wherein the target irradiation intensity value is not greater than 100 µmol·m⁻²·s⁻¹, and the target irradiation duration is not greater than 120 h.

9. The method according to any one of claims 1 to 4, further comprising the following steps after the controlling step:
a second determining step: determining a storage duration of the food ingredient in the storage room (200); and
a prompting step: when the storage duration is not less than a first preset storage duration, sending a tasting prompt instruction, wherein the first preset storage duration is not less than the second preset duration.

10. The method according to claim 9, wherein the prompting step further comprises the following step:
when the storage duration is equal to a second preset storage duration, sending a prompt instruction indicating an expiration of a best tasting period, wherein the first preset storage duration is less than the second preset storage duration, optionally, wherein the first preset storage duration and the second preset storage duration are determined based on historical data and/or a type of food ingredient.

11. The method according to any one of claims 1 to 4, wherein the light source (300) comprises a blue light source, and the blue light emitted by the blue light source has a wavelength of 440 nm to 460 nm.

12. A controlling device for improving nutrients in food ingredients, comprising:
a turning-on module, configured to control a light source (300) to turn it on based on a closing signal of a storage room (200);
a humidity obtaining module, configured to obtain a humidity of the storage room (200) after a first preset duration;
a first determining module, configured to determine a target irradiation intensity value and a target irradiation duration for all the food ingredients in the storage room (200) when humidity in the storage room (200) is greater than a target humidity by:
when humidity in the storage room (200) is greater than the target humidity, obtaining a type of the food ingredient in the storage room (200) based on an image of each food ingredient,
determining a minimum irradiation intensity value and a shortest irradiation duration required by the type of the food ingredient by mapping the type of the food ingredient against a relationship table, the relationship table storing irradiation intensity values and irradiation durations against types of food ingredients, and
determining the target irradiation intensity value and the target irradiation duration based on comparison of the minimum irradiation intensity values and the shortest irradiation durations of all the food ingredients in the storage room;
a setting module, configured to set an irradiation intensity value of the light source (300) as the target irradiation intensity value, and set the target irradiation duration as a second preset duration; and
a controlling module, configured to control, when humidity in the storage room (200) is greater than a target humidity, a humidity control fan to operate in a normal mode and turn off the light source (300) after the second preset duration.

13. A storage cabinet (100), comprising a cabinet body, a light source (300), a humidity detector, and the controlling device for improving nutrients in a food ingredient according to claim 12, wherein a storage room (200) is formed in the cabinet body, the light source (300) and the humidity detector is provided in the storage room (200), the light source (300) is in communication with the turning-on module and the controlling module respectively, and the humidity detector is in communication with the humidity obtaining module.

## Patentansprüche

1. Verfahren zum Verbessern von Nährstoffen in einem Lebensmittel, das die folgenden Schritte umfasst:
einen Einschaltschritt: Steuern einer Lichtquelle (300) zum Einschalten auf der Basis eines Schließsignals eines Lagerraums (200);
einen Feuchtigkeitserhalteschritt: Erhalten einer Feuchtigkeit in dem Lagerraum (200) nach einer ersten voreingestellten Dauer;
einen ersten Bestimmungsschritt: wenn eine Feuchtigkeit in dem Lagerraum (200) größer als eine Zielfeuchtigkeit ist, Bestimmen eines Zielbestrahlungsstärkewerts und einer Zielbestrahlungsdauer für alle Lebensmittel in dem Lagerraum (200) durch Folgendes:
wenn eine Feuchtigkeit in dem Lagerraum (200) größer als die Zielfeuchtigkeit ist, Erhalten einer Art des Lebensmittels in dem Lagerraum (200) auf der Basis eines Bilds jedes Lebensmittels,
Bestimmen eines Mindestbestrahlungsstärkewerts und einer kürzesten Bestrahlungsdauer, die für die Art des Lebensmittels erforderlich sind, durch Zuordnen der Art des Lebensmittels gegenüber einer Beziehungstabelle, wobei in der Beziehungstabelle Bestrahlungsstärkewerte und Bestrahlungsdauern gegenüber Arten von Lebensmitteln gespeichert sind, und
Bestimmen des Zielbestrahlungsstärkewerts und der Zielbestrahlungsdauer auf der Basis eines Vergleichs der Mindestbestrahlungsstärkewerte und der kürzesten Bestrahlungsdauern aller Lebensmittel in dem Lagerraum;
einen Einstellungsschritt: Einstellen des Zielbestrahlungsstärkewerts als einen Bestrahlungsstärkewert der Lichtquelle (300) und Einstellen der Zielbestrahlungsdauer als eine zweite voreingestellte Dauer; und
einen Steuerungsschritt: wenn eine Feuchtigkeit in dem Lagerraum (200) größer als eine Zielfeuchtigkeit ist, Steuern eines Feuchtigkeitsregelungsventilators zum Betrieb in einem Normalmodus und Ausschalten der Lichtquelle (300) nach der zweiten voreingestellten Dauer.

2. Verfahren nach Anspruch 1, wobei der Steuerungsschritt ferner die folgenden Schritte umfasst: wenn eine Feuchtigkeit in dem Lagerraum (200) nicht größer als die Zielfeuchtigkeit ist, Steuern des Feuchtigkeitsregelungsventilators zum Betrieb in einem Modus für geringe Feuchtigkeit und Ausschalten der Lichtquelle (300).

3. Verfahren nach Anspruch 1, wobei die Zielfeuchtigkeit auf der Basis historischer Daten oder einer Feuchtigkeit in dem Lagerraum (200) vor dem Einschaltschritt bestimmt wird.

4. Verfahren nach Anspruch 1, das nach dem Einschaltschritt ferner den folgenden Schritt umfasst:
einen Ausschaltschritt: Steuern der Lichtquelle (300) zum Ausschalten nach einer dritten voreingestellten Dauer auf der Basis eines Öffnungssignals des Lagerraums (200).

5. Verfahren nach Anspruch 1, wobei das Bestimmen des Zielbestrahlungsstärkewerts und der Zielbestrahlungsdauer Folgendes umfasst:
wenn sich nur eine Art eines Lebensmittels in dem Lagerraum (200) befindet, Einstellen des Mindestbestrahlungsstärkewerts als den Zielbestrahlungsstärkewert und Einstellen der kürzesten Bestrahlungsdauer als die Zielbestrahlungsdauer; und,
wenn sich eine Vielzahl von Arten von Lebensmitteln in dem Lagerraum (200) befindet, Einstellen des höchsten aller Mindestbestrahlungsstärkewerte der Vielzahl von Arten von Lebensmitteln als den Zielbestrahlungsstärkewert und Einstellen des Höchstwerts aller kürzesten Bestrahlungsdauern aller der Vielzahl von Arten von Lebensmitteln als die Zielbestrahlungsdauer.

6. Verfahren nach Anspruch 5, das ferner die folgenden Schritte zwischen dem Einstellungsschritt und dem Steuerungsschritt umfasst, wenn sich eine Vielzahl von Arten von Lebensmitteln in dem Lagerraum (200) befindet:
erneutes Erhalten einer jeweiligen Art eines Lebensmittels in dem Lagerraum (200) auf der Basis des Schließsignals des Lagerraums (200);
wenn eine Gesamtzahl jeweiliger Arten von Lebensmitteln in dem Lagerraum (200) vor dem Einstellungsschritt kleiner als eine Gesamtzahl von Arten von Lebensmitteln in dem Lagerraum (200) ist, Erhalten des Mindestbestrahlungsstärkewerts und der kürzesten Bestrahlungsdauer, die einer herausgenommenen Art eines Lebensmittels entsprechen;
wenn der Mindestbestrahlungsstärkewert, der für die herausgenommene Art eines Lebensmittels erforderlich ist, größer als der Mindestbestrahlungsstärkewert jeder jeweiligen Art eines Lebensmittels ist, Aktualisieren des bei dem Einstellungsschritt eingestellten Zielbestrahlungsstärkewerts auf den Höchstwert aller Mindestbestrahlungsstärken, die allen jeweiligen Arten von Lebensmitteln entsprechen;
wenn die kürzeste Bestrahlungsdauer, die für die herausgenommene Art eines Lebensmittels erforderlich ist, größer als die kürzeste Bestrahlungsdauer jeder jeweiligen Art eines Lebensmittels ist, Erhalten einer Dauer, für die die Lichtquelle (300) eingeschaltet gewesen ist; und,
wenn die Dauer, für die die Lichtquelle (300) eingeschaltet gewesen ist, kleiner als der Höchstwert aller kürzesten Bestrahlungsdauern, die allen jeweiligen Arten von Lebensmitteln entsprechen, ist, Aktualisieren der bei dem Einstellungsschritt eingestellten Zielbestrahlungsdauer auf den Höchstwert aller kürzesten Bestrahlungsdauern, die allen jeweiligen Arten von Lebensmitteln entsprechen.

7. Verfahren nach Anspruch 6, das ferner die folgenden Schritte zwischen dem Einstellungsschritt und dem Steuerungsschritt umfasst, wenn sich eine Vielzahl von Arten von Lebensmitteln in dem Lagerraum (200) befindet:
wenn eine Gesamtzahl der jeweiligen Arten von Lebensmitteln in dem Lagerraum (200) vor dem Einstellungsschritt über eine Gesamtzahl der Arten von Lebensmitteln in dem Lagerraum (200) hinausgeht, Erhalten des Mindestbestrahlungsstärkewerts und der kürzesten Bestrahlungsdauer, die einer zusätzlichen Art eines Lebensmittels entsprechen;
wenn der Mindestbestrahlungsstärkewert, der für die zusätzliche Art von Lebensmitteln erforderlich ist, vor dem Einstellungsschritt größer als alle Mindestbestrahlungsstärken, die allen Arten von Lebensmitteln entsprechen, ist, Aktualisieren des Zielbestrahlungsstärkewerts bei dem Einstellungsschritt auf den Mindestbestrahlungsstärkewert, der der zusätzlichen Art eines Lebensmittels entspricht; und,
wenn die kürzeste Bestrahlungsdauer, die für die zusätzliche Art eines Lebensmittels erforderlich ist, vor dem Einstellungsschritt größer als alle kürzesten Bestrahlungsdauern, die allen Arten von Lebensmitteln entsprechen, ist, erneutes Starten einer Zeitmessung und Aktualisieren der bei dem Einstellungsschritt eingestellten Zielbestrahlungsdauer auf die kürzeste Bestrahlungsdauer, die der zusätzlichen Art eines Lebensmittels entspricht.

8. Verfahren nach Anspruch 1, wobei der erste Bestimmungsschritt Folgendes umfasst:
Erhalten eines Eingangsbestrahlungsstärkewerts und einer Eingangsbestrahlungsdauer, die von einem Benutzer manuell eingegeben werden; und
Einstellen des Eingangsbestrahlungsstärkewerts als den Zielbestrahlungsstärkewert und Einstellen der Eingangsbestrahlungsdauer als die Zielbestrahlungsdauer, oder wobei der Zielbestrahlungsstärkewert nicht größer als 100 µmol·m⁻²·s⁻¹ und die Zielbestrahlungsdauer nicht größer als 120 h ist.

9. Verfahren nach einem der Ansprüche 1 bis 4, das ferner die folgenden Schritte nach dem Steuerungsschritt umfasst:
einen zweiten Bestimmungsschritt: Bestimmen einer Lagerdauer des Lebensmittels in dem Lagerraum (200); und
einen Aufforderungsschritt: wenn die Lagerdauer nicht kleiner als eine erste voreingestellte Lagerdauer ist, Senden einer Verzehraufforderungsanweisung, wobei die erste voreingestellte Lagerdauer nicht kleiner als die zweite voreingestellte Dauer ist.

10. Verfahren nach Anspruch 9, wobei der Aufforderungsschritt ferner den folgenden Schritt umfasst:
wenn die Lagerdauer gleich einer zweiten voreingestellten Lagerdauer ist, Senden einer Aufforderungsanweisung, die einen Ablauf eines besten Verzehrzeitraums angibt, wobei die erste voreingestellte Lagerdauer kleiner als die zweite voreingestellte Lagerdauer ist, wobei die erste voreingestellte Lagerdauer und die zweite voreingestellte Lagerdauer optional auf der Basis historischer Daten und/oder einer Art eines Lebensmittels bestimmt werden.

11. Verfahren nach einem der Ansprüche 1 bis 4, wobei die Lichtquelle (300) eine Blaulichtquelle umfasst und das von der Blaulichtquelle ausgesendete Blaulicht eine Wellenlänge von 440 nm bis 460 nm aufweist.

12. Steuereinrichtung zum Verbessern von Nährstoffen in Lebensmitteln, die Folgendes umfasst:
ein Einschaltmodul, das dazu konfiguriert ist, eine Lichtquelle (300), um sie einzuschalten, auf der Basis eines Schließsignals eines Lagerraums (200) zu steuern;
ein Feuchtigkeitserhaltemodul, das dazu konfiguriert ist, eine Feuchtigkeit des Lagerraums (200) nach einer ersten voreingestellten Dauer zu erhalten;
ein erstes Bestimmungsmodul, das dazu konfiguriert ist, einen Zielbestrahlungsstärkewert und eine Zielbestrahlungsdauer für alle Lebensmittel in dem Lagerraum (200), wenn eine Feuchtigkeit in dem Lagerraum (200) größer als eine Zielfeuchtigkeit ist, durch Folgendes zu bestimmen:
wenn eine Feuchtigkeit in dem Lagerraum (200) größer als die Zielfeuchtigkeit ist, Erhalten einer Art des Lebensmittels in dem Lagerraum (200) auf der Basis eines Bilds jedes Lebensmittels,
Bestimmen eines Mindestbestrahlungsstärkewerts und einer kürzesten Bestrahlungsdauer, die für die Art des Lebensmittels erforderlich sind, durch Zuordnen der Art des Lebensmittels gegenüber einer Beziehungstabelle, wobei in der Beziehungstabelle Bestrahlungsstärkewerte und Bestrahlungsdauern gegenüber Arten von Lebensmitteln gespeichert sind, und
Bestimmen des Zielbestrahlungsstärkewerts und der Zielbestrahlungsdauer auf der Basis eines Vergleichs der Mindestbestrahlungsstärkewerte und der kürzesten Bestrahlungsdauern aller Lebensmittel in dem Lagerraum;
ein Einstellungsmodul, das dazu konfiguriert ist, einen Bestrahlungsstärkewert der Lichtquelle (300) als den Zielbestrahlungsstärkewert einzustellen und die Zielbestrahlungsdauer als eine zweite voreingestellte Dauer einzustellen; und
ein Steuermodul, das dazu konfiguriert ist, wenn eine Feuchtigkeit in dem Lagerraum (200) größer als eine Zielfeuchtigkeit ist, einen Feuchtigkeitsregelungsventilator zum Betrieb in einem Normalmodus zu steuern und die Lichtquelle (300) nach der zweiten voreingestellten Dauer auszuschalten.

13. Lagerschrank (100), der einen Schrankkörper, eine Lichtquelle (300), einen Feuchtigkeitsfühler und die Steuereinrichtung zum Verbessern von Nährstoffen in einem Lebensmittel nach Anspruch 12 umfasst, wobei in dem Schrankkörper ein Lagerraum (200) ausgebildet ist, die Lichtquelle (300) und der Feuchtigkeitsfühler in dem Lagerraum (200) bereitgestellt sind, die Lichtquelle (300) in Kommunikation mit dem Einschaltmodul bzw. dem Steuermodul steht und der Feuchtigkeitsfühler in Kommunikation mit dem Feuchtigkeitserhaltemodul steht.

## Revendications

1. Procédé d'amélioration de nutriments dans un ingrédient alimentaire, comprenant les étapes suivantes :
une étape d'allumage : commander une source de lumière (300) pour qu'elle s'allume sur la base d'un signal de fermeture d'une chambre d'entreposage (200) ;
une étape d'obtention d'humidité : obtenir une humidité dans la chambre d'entreposage (200) après une première durée prédéfinie ;
une première étape de détermination : lorsque l'humidité dans la chambre d'entreposage (200) est supérieure à une humidité cible, déterminer une valeur d'intensité d'irradiation cible et une durée d'irradiation cible pour tous les ingrédients alimentaires dans la chambre d'entreposage (200) en effectuant les étapes consistant à :
lorsque l'humidité dans la chambre d'entreposage (200) est supérieure à l'humidité cible, obtenir un type de l'ingrédient alimentaire dans la chambre d'entreposage (200) sur la base d'une image de chaque ingrédient alimentaire,
déterminer une valeur d'intensité d'irradiation minimale et une durée d'irradiation la plus courte requises par le type de l'ingrédient alimentaire en mettant en correspondance le type de l'ingrédient alimentaire par rapport à une table de relations, la table de relations stockant des valeurs d'intensité d'irradiation et des durées d'irradiation par rapport à des types d'ingrédients alimentaires, et
déterminer la valeur d'intensité d'irradiation cible et la durée d'irradiation cible sur la base d'une comparaison des valeurs d'intensité d'irradiation minimales et des durées d'irradiation les plus courtes de tous les ingrédients alimentaires dans la chambre d'entreposage ;
une étape de réglage : régler la valeur d'intensité d'irradiation cible comme valeur d'intensité d'irradiation de la source de lumière (300) et régler la durée d'irradiation cible comme deuxième durée prédéfinie ; et
une étape de commande : lorsque l'humidité dans la chambre d'entreposage (200) est supérieure à une humidité cible, commander un ventilateur de commande d'humidité pour qu'il fonctionne en mode normal et éteindre la source de lumière (300) après la deuxième durée prédéfinie.

2. Procédé selon la revendication 1, l'étape de commande comprenant en outre les étapes suivantes : lorsque l'humidité dans la chambre d'entreposage (200) n'est pas supérieure à l'humidité cible, commander le ventilateur de commande d'humidité pour qu'il fonctionne en mode faible humidité et éteindre la source de lumière (300).

3. Procédé selon la revendication 1, l'humidité cible étant déterminée sur la base de données historiques ou de l'humidité dans la chambre d'entreposage (200) avant l'étape d'allumage.

4. Procédé selon la revendication 1, comprenant en outre, après l'étape d'allumage, l'étape suivante :
une étape d'extinction : commander la source de lumière (300) pour qu'elle s'éteigne après une troisième durée prédéfinie sur la base d'un signal d'ouverture de la chambre d'entreposage (200).

5. Procédé selon la revendication 1, la détermination de la valeur d'intensité d'irradiation cible et de la durée d'irradiation cible comprenant les étapes consistant à :
lorsqu'un seul type d'ingrédient alimentaire est dans la chambre d'entreposage (200), régler la valeur d'intensité d'irradiation minimale comme valeur d'intensité d'irradiation cible et régler la durée d'irradiation la plus courte comme durée d'irradiation cible ; et
lorsqu'une pluralité de types d'ingrédients alimentaires sont dans la chambre d'entreposage (200), régler le maximum de toutes les valeurs d'intensité d'irradiation minimales de la pluralité de types d'ingrédients alimentaires comme valeur d'intensité d'irradiation cible et régler la valeur maximale de toutes les durées d'irradiation les plus courtes de tous les types parmi la pluralité de types d'ingrédients alimentaires comme durée d'irradiation cible.

6. Procédé selon la revendication 5, comprenant en outre les étapes suivantes entre l'étape de réglage et l'étape de commande lorsqu'une pluralité de types d'ingrédients alimentaires sont dans la chambre d'entreposage (200) :
réobtenir un type actuel d'ingrédient alimentaire dans la chambre d'entreposage (200) sur la base du signal de fermeture de la chambre d'entreposage (200) ;
lorsqu'un nombre total de types actuels d'ingrédients alimentaires dans la chambre d'entreposage (200) est inférieur à un nombre total de types d'ingrédients alimentaires dans la chambre d'entreposage (200) avant l'étape de réglage, obtenir la valeur d'intensité d'irradiation minimale et la durée d'irradiation la plus courte correspondant à un type retiré d'ingrédient alimentaire ;
lorsque la valeur d'intensité d'irradiation minimale requise pour le type retiré d'ingrédient alimentaire est supérieure à la valeur d'intensité d'irradiation minimale de chaque type actuel d'ingrédient alimentaire, mettre à jour la valeur d'intensité d'irradiation cible réglée à l'étape de réglage à la valeur maximale de toutes les intensités d'irradiation minimales correspondant à tous les types actuels d'ingrédients alimentaires ;
lorsque la durée d'irradiation la plus courte requise par le type retiré d'ingrédient alimentaire est supérieure à la durée d'irradiation la plus courte de chaque type actuel d'ingrédient alimentaire, obtenir une durée pendant laquelle la source de lumière (300) a été allumée ; et
lorsque la durée pendant laquelle la source de lumière (300) a été allumée est inférieure à la valeur maximale de toutes les durées d'irradiation les plus courtes correspondant à tous les types actuels d'ingrédients alimentaires, mettre à jour la durée d'irradiation cible réglée à l'étape de réglage à la valeur maximale de toutes les durées d'irradiation les plus courtes correspondant à tous les types actuels d'ingrédients alimentaires.

7. Procédé selon la revendication 6, comprenant en outre les étapes suivantes entre l'étape de réglage et l'étape de commande lorsqu'une pluralité de types d'ingrédients alimentaires sont dans la chambre d'entreposage (200) :
lorsqu'un nombre total des types actuels d'ingrédients alimentaires dans la chambre d'entreposage (200) est supérieur à un nombre total des types d'ingrédients alimentaires dans la chambre d'entreposage (200) avant l'étape de réglage, obtenir la valeur d'intensité d'irradiation minimale et la durée d'irradiation la plus courte correspondant à un type supplémentaire d'ingrédient alimentaire ;
lorsque la valeur d'intensité d'irradiation minimale requise par le type supplémentaire d'ingrédients alimentaires est supérieure à toutes les intensités d'irradiation minimales correspondant à tous les types d'ingrédients alimentaires avant l'étape de réglage, mettre à jour la valeur d'intensité d'irradiation cible à l'étape de réglage à la valeur d'intensité d'irradiation minimale correspondant au type supplémentaire d'ingrédient alimentaire ; et
lorsque la durée d'irradiation la plus courte requise par le type supplémentaire d'ingrédient alimentaire est supérieure à toutes les durées d'irradiation les plus courtes correspondant à tous les types d'ingrédients alimentaires avant l'étape de réglage, redémarrer la minuterie et mettre à jour la durée d'irradiation cible réglée à l'étape de réglage à la durée d'irradiation la plus courte correspondant au type supplémentaire d'ingrédient alimentaire.

8. Procédé selon la revendication 1, la première étape de détermination comprenant :
obtenir une valeur d'intensité d'irradiation d'entrée et une durée d'irradiation d'entrée entrées manuellement par un utilisateur ; et
régler la valeur d'intensité d'irradiation d'entrée comme valeur d'intensité d'irradiation cible et régler la durée d'irradiation d'entrée comme durée d'irradiation cible, ou la valeur d'intensité d'irradiation cible n'étant pas supérieure à 100 µmol·m²·s⁻¹ et la durée d'irradiation cible n'étant pas supérieure à 120 h.

9. Procédé selon l'une quelconque des revendications 1 à 4, comprenant en outre les étapes suivantes après l'étape de commande :
une seconde étape de détermination : déterminer une durée d'entreposage de l'ingrédient alimentaire dans la chambre d'entreposage (200) ; et
une étape d'invitation : lorsque la durée d'entreposage n'est pas inférieure à une première durée d'entreposage prédéfinie, envoyer une instruction d'invitation à la dégustation, la première durée d'entreposage prédéfinie n'étant pas inférieure à la seconde durée prédéfinie.

10. Procédé selon la revendication 9, l'étape d'invitation comprenant en outre l'étape suivante :
lorsque la durée d'entreposage est égale à une seconde durée d'entreposage prédéfinie, envoyer une instruction d'invitation indiquant une expiration d'une période de dégustation optimale, la première durée d'entreposage prédéfinie étant inférieure à la seconde durée d'entreposage prédéfinie, la première durée d'entreposage prédéfinie et la seconde durée d'entreposage prédéfinie étant éventuellement déterminées sur la base de données historiques et/ou d'un type d'ingrédient alimentaire.

11. Procédé selon l'une quelconque des revendications 1 à 4, la source de lumière (300) comprenant une source de lumière bleue, et la lumière bleue émise par la source de lumière bleue ayant une longueur d'onde comprise dans la plage de 440 nm à 460 nm.

12. Dispositif de commande pour l'amélioration de nutriments dans des ingrédients alimentaires, comprenant :
un module d'allumage, configuré pour commander une source de lumière (300) pour qu'elle s'allume sur la base d'un signal de fermeture d'une chambre d'entreposage (200) ;
un module d'obtention d'humidité, configuré pour obtenir une humidité de la chambre d'entreposage (200) après une première durée prédéfinie ;
un premier module de détermination, configuré pour déterminer une valeur d'intensité d'irradiation cible et une durée d'irradiation cible pour tous les ingrédients alimentaires dans la chambre d'entreposage (200) lorsque l'humidité dans la chambre d'entreposage (200) est supérieure à une humidité cible, en effectuant les opérations consistant à :
lorsque l'humidité dans la chambre d'entreposage (200) est supérieure à l'humidité cible, obtenir un type de l'ingrédient alimentaire dans la chambre d'entreposage (200) sur la base d'une image de chaque ingrédient alimentaire,
déterminer une valeur d'intensité d'irradiation minimale et une durée d'irradiation la plus courte requises par le type de l'ingrédient alimentaire en mettant en correspondance le type de l'ingrédient alimentaire par rapport à une table de relations, la table de relations stockant des valeurs d'intensité d'irradiation et des durées d'irradiation par rapport à des types d'ingrédients alimentaires, et
déterminer la valeur d'intensité d'irradiation cible et la durée d'irradiation cible sur la base d'une comparaison des valeurs d'intensité d'irradiation minimales et des durées d'irradiation les plus courtes de tous les ingrédients alimentaires dans la chambre d'entreposage ;
un module de réglage, configuré pour régler une valeur d'intensité d'irradiation de la source de lumière (300) comme valeur d'intensité d'irradiation cible et régler la durée d'irradiation cible comme deuxième durée prédéfinie ; et
un module de commande, configuré pour commander, lorsque l'humidité dans la chambre d'entreposage (200) est supérieure à une humidité cible, un ventilateur de commande d'humidité pour qu'il fonctionne en mode normal et éteindre la source de lumière (300) après la deuxième durée prédéfinie.

13. Armoire d'entreposage (100), comprenant un corps d'armoire, une source de lumière (300), un détecteur d'humidité et le dispositif de commande pour l'amélioration de nutriments dans un ingrédient alimentaire selon la revendication 12, une chambre d'entreposage (200) étant formée dans le corps d'armoire, la source de lumière (300) et le détecteur d'humidité étant situés dans la chambre d'entreposage (200), la source de lumière (300) étant respectivement en communication avec le module d'allumage et le module de commande, et le détecteur d'humidité étant en communication avec le module d'obtention d'humidité.
